# EUROPEAN PATENT APPLICATION

(11) **EP 4 177 702 A1**
(43) Date of publication of application: **10.05.2023**
(21) Application number: 21020556.3
(22) Date of filing: 08.11.2021
(51) Int. Cl.: G06F 1/16, G06F 3/038, G06F 3/041, G06F 3/0488

(54) **APPARATUS AND METHOD FOR SUPPORTING TOUCH INPUT EVENTS**

(71) Applicant: HM Group AB, 10223 Stockholm (SE)
(72) Inventor: Takmazov, Vitaly, 392001 Tambov (RU); Gottlieb, Jakob, 75316 Uppsala (SE)

(57) **Abstract**

A computer system for managing receipt of touch input events, the computer system being controlled by an operating system and comprising an input control module;
wherein the input control module is configured to:
receive a touch input event from the operating system due to a user interacting with a touch screen display;
compare the position data associated with the touch input event with a predefined area, and

wherein, if the position data is associated with the predefined area, send the touch input event to a target program module;
and wherein if the position data is not associated with the predefined area, return the touch input event to the operating system.

## Description

The present invention relates to an apparatus and method for supporting multiple touch input events from one or more users using two or more input event devices without the risk of input command interference between the input events from the one or more users. The apparatus and method may be used when two or more programs are running on one computer system using one operating system.

The use of a plurality of displays by one or more users is common in various fields where computer systems are used. For example, multiple users may be collaborating on a project which involves interaction through, for example, a main touch screen display and at least one secondary touch screen display. In another example at a point of sales terminal, a shopper making a purchase may use a secondary display to perform various actions such as selecting a particular product to be purchased or providing payment details when making a purchase. At the same time the cashier may be using the main display to perform various further actions associated with the sale, such as confirming the availability or price of the product to be bought or verifying the payment details provided by the shopper.

To simplify the control of multiple input events such as touch screen inputs in such a system, a single computer system may manage the control of each touch screen. One way of controlling such an arrangement with more than one touch screen display is to provide multiple operating systems on the computer system, where each one of the operating systems is associated with a corresponding input device such as a display and other hardware associated with the user of that display. Each separate operating system is therefore linked to the corresponding input device, receives the input events from the corresponding input device and performs processing of the input command to show the appropriate response on the display being used by the user.

In such an arrangement, the multiple operating systems are running in parallel on the computer system. Such an arrangement may be referred to as a virtual machine. However, this arrangement can be disadvantageous as many operating systems do not support functioning in this way. In addition to this, it may be difficult to configure multiple operating systems to run in parallel while allowing the computer system to function normally. Furthermore, running two or more separate operating systems requires a large amount of processing power.

It would therefore be desirable to provide an alternative method of dealing with multiple input events from one or more users using two or more input devices which overcame the above problems.

According to the present invention there is provided an apparatus and method for managing receipt of input events from different users.

An aspect of the invention provides a computer system for managing receipt of touch input events, the computer system being controlled by an operating system and comprising an input control module; wherein the input control module is configured to:
receive a touch input event from the operating system due to a user interacting with a touch screen display;
compare the position data associated with the touch input event with a predefined area, and
wherein, if the position data is associated with the predefined area, send the touch input event to a target program module;
and wherein if the position data is not associated with the predefined area, return the touch input event to the operating system.

Another aspect of the invention provides a method of managing receipt of touch input events, the method comprising:
Receiving, by an input control module, a touch input event from an operating system due to a user interacting with a touch screen display;
comparing the position data associated with the touch input event with a predefined area by the input control module, and
wherein, if the touch input event is associated with the predefined area,
sending the touch input event to a target program module from the input control module;
and wherein if the touch input event is not associated with the predefined area, returning the touch input event to the operating system via the input control module.

Exemplary embodiments of the invention will be described below with reference to the accompanying drawings, in which:
Figure 1 shows a schematic representation of a computer system comprising multiple displays.
Figure 2 shows an example where multiple display regions are provided on multiple displays; and
Figure 3 shows a flowchart of how events may be handled by a computer system according to the present invention;

### Operation of computer system and input events

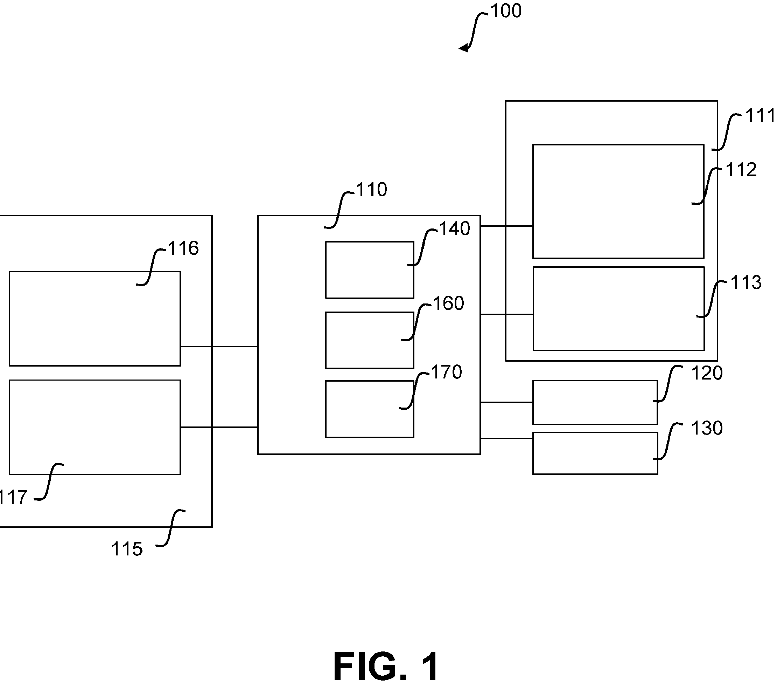

Figure 1 shows a schematic example of a computer system 100. The computer system 100 is connected to a first display 111 and a second display 115, which may be referred to as screens. One or more of the first display 111 and a second display 115 may be a touchscreen which is configured to receive touch input from a user of the display. One or more of the first and second displays may comprise a display portion 112, 116 and a touch panel portion 113, 117. The display portion may show visible information to a user of the display. The touch panel portion may receive touch input from the user of the display. The display portion and the touch panel portion of the display may be located on the same portion of the display.

In the example shown in Figure 1, both of the displays 111, 115 comprise touch panel portions and are therefore configured to receive touch input events from a user of the display. However, one or more of the displays may comprise only a display portion and therefore may not be capable of receiving touch input. One of the displays may be a main display and one or more of the other displays may be secondary displays. The main display may be larger and may be used by a leader of a meeting or an employee. The secondary displays may be smaller and may be used by other participants of the meeting or by a shopper making a purchase from the employee.

The computer system 100 may further comprise at least one of a mouse 120 and a keyboard 130. The mouse and keyboard are examples of further input devices which may be used by a user to provide input events to the computer system 100. A plurality of mice and/or keyboards may be connected to the computer system 100. The mouse 120 and keyboard 130 may alternatively or additionally be used by the user of one or more of the displays to provide input events to the computer system 100.

Each of the devices discussed above is connected to the processor 110 of the computer system 100. The processor 110 may be running a number of programs associated with particular modules of the computer system 100. For example, a system control module 140 may be running an operating system which operates the computer system 100.

The operating system is responsible for allowing the users to interact with the computer system 100 and allowing the users to interact with the various pieces of hardware included in the computer system 100 and the software programs which may be executed by the computer system 100. Examples of operating systems include Windows, UNIX/LINUX environments and MacOS. The operating system may have an application programming interface (API) which includes a set of functions which allow other applications running on the computer system 100 to interact with the operating system. The operating system may be responsible for receiving input events from a user of the computer system 100 via input devices connected to the computer system 100, transferring these inputs to various computer programs running on the computer system 100, receiving outputs from the computer programs and using these outputs to display particular information on output devices such as displays connected to the computer system 100. The operating system may receive inputs from the input devices such as the displays 111, 115, the mouse 120 and the keyboard 130 connected to the computer system 100.

Further program modules may be running programs which perform other functions on the computer system 100. A program may be displayed to the user via a window associated with the program that is defined by the operating system. The window may be shown on one of the displays 111, 115. The operating system may associate particular windows with particular programs. A particular program may be referred to as the target program module and the associated window may be referred to as the target program window. The target program module may be the program that receives inputs transferred by the operating system. In order to run a window, the operating system may first create the window. However, the operating system may define further windows that are not associated with a particular program running on the computer system. These further windows may be used to perform other functions associated with the use of the operating system, such as the receipt of input events from the user which will be defined in further detail below.

The inputs received by the operating system from the input devices due to user input may be referred to as input events. The operating system may receive different types of events in addition to the input events from the input devices. For example, the operating system may receive events associated with the operation of the input device such as the level of charge of the battery of the input device, the operation state of the input device (such as on, off or in standby mode) or errors of the input device. The operating system may also receive system events generated by other hardware associated with the computer system 100 such as the processor 110. The operating system may cause the display of information in relation to the system event to the user or may perform another action in relation to management of the computer system in response to a system event.

An input event may be generated by an input device such as any one of the touch panel portions 113, 117, the mouse 120 or the keyboard 130. Input events generated by a touch panel portion may be referred to as touch input events. The touch input event may be referred to as a pointer event. Touch input events may be generated by a user interacting with the touch panel portion using their finger or another device such as a digital pen stylus. The touch input event may be any one of a pointer down event, where the user touches the display in a particular location, a pointer move event where the user moves their finger while their finger is in contact with the display and a pointer up event where the user removes their finger from the display.

The input device may be able to generate further input events depending on the configuration of the input device. The input device may be capable of recognising a particular combination of input events and generating a combined input command based on the combination. For example, a pointer down event followed by a pointer move event followed by a pointer up event may be recognised by the input device as corresponding to the user intending to drag an object shown on the display across the display. The input device may therefore combine the pointer down, pointer move and pointer up event into a pointer drag event and send the pointer drag event to the operating system. The combination of different input events may be referred to as a gesture event or an input command. The combination of different input events may alternatively be performed by a different component of the computer system 100 such as the operating system or a program module as discussed below.

Input events generated by the input device may be associated with position data. For example, in the case of a touch screen display, a touch input event may be generated including position data which defines the location of the input event on the surface of the touch screen display. The position data may be defmed using a coordinate system associated with the surface of the touch screen display. For example, the position data may be defined by an x-coordinate and a y-coordinate which correspond to the absolute position at which the touch event took place at the surface of the touch screen display. Alternatively or additionally, the position data may be defined relative to a different location. For example, the position data may be defined with respect to the location at which the previous touch input event took place.

Further data may be associated with input events generated by input devices. For example, the time that the input event was generated at may be associated with the input event. The location, time and other data associated with an input event may be referred to as the characteristics of that input event. The characteristics of input events may be used to combine a plurality of input events into a single combined event such as a gesture. For example, the timing and position data of a series of input events may correspond to a user performing a particular gesture such as dragging and dropping a feature shown on the display.

When the input event is generated by an input device that is not capable of defining an absolute location associated with the input event, the input event may be generated without any associated position data. Alternatively, the input device may be capable of tracking the relative motion of the input made by the user, for example the movement of a mouse input device. In this case, the input device may associate relative position data with generated input events defmed with respect to, for example, the start of a motion made by the user of the input device. Input devices such as a keyboard may generate position data associated with an input event in the same way. For example, depression of a cursor key by a user may cause an initial input event which defines an initial position and position data may be associated with later input events based on the time that has passed since the generation of the initial input event.

The types of data discussed above may be associated with the input event by the input device. Alternatively or additionally, the data may be associated with the input event by the operating system or a different module of the computer system.

Further examples of input devices that may generate input events include trackballs, digital pen styluses, touchpads, infra-red or visible light cameras and other motions sensors such as LIDAR devices which are capable of recognising the motion or gestures of a user, controllers such a game controllers and microphones which may receive voice input from a user.

An input event generated by an input device may be received by the operating system. The operating system may perform actions in response to receipt of an input event and data associated with the input event. For example, the operating system may change the position of a cursor visible on a display in response to receipt of an input event. The operating system may select a window associated with a program running on the computer system 100 to become the focus window based on the input event. This means that further input events may be processed by the operating system and sent to the program that is associated with the window that is presently the focus window. The program may receive the input events and perform actions based on the data associated with the input events.

The processor 110 may also be running a communication manager on a communications module 160 and an input control apparatus on an input control module 170. Each of the communication manager and the input control apparatus is configured to send and receive events to each other and to the operating system. The communication manager and the input control apparatus may be initialised by the operating system on start-up of the operating system. The operation of the communication manager and the input control apparatus will be described in greater detail below.

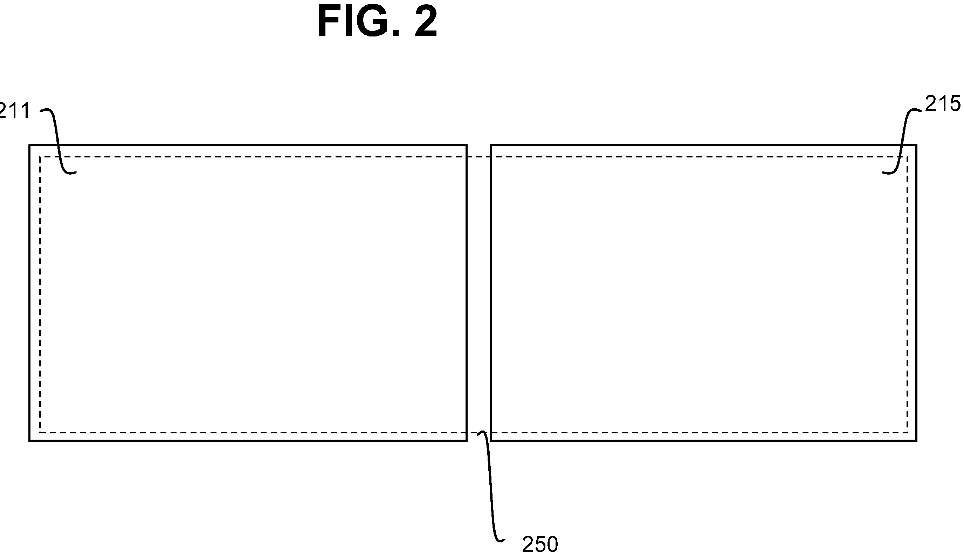

Although the schematic illustration in Figure 1 shows the first display 111 and the second display 115 as separate devices, the first and second display may be treated as one single display by the operating system. The single display may be referred to as a virtual display. An example of such an arrangement is shown in Figure 2. In this case, the first touch screen display 211 and the second touch screen display 215 are configured with different position data in the operating system. Both touch screen displays 211 and 215 may be being used by separate users, but all of the touch input events generated by use of the first and second touch screen displays will be associated with the single virtual display 250. The operating system may receive all touch input events from both touch screen displays 211 and 215 to the virtual display 250.

In the example shown in figure 2, the regions defined by the first and second display do not overlap with each other.

### Operation of communication manager and input control apparatus

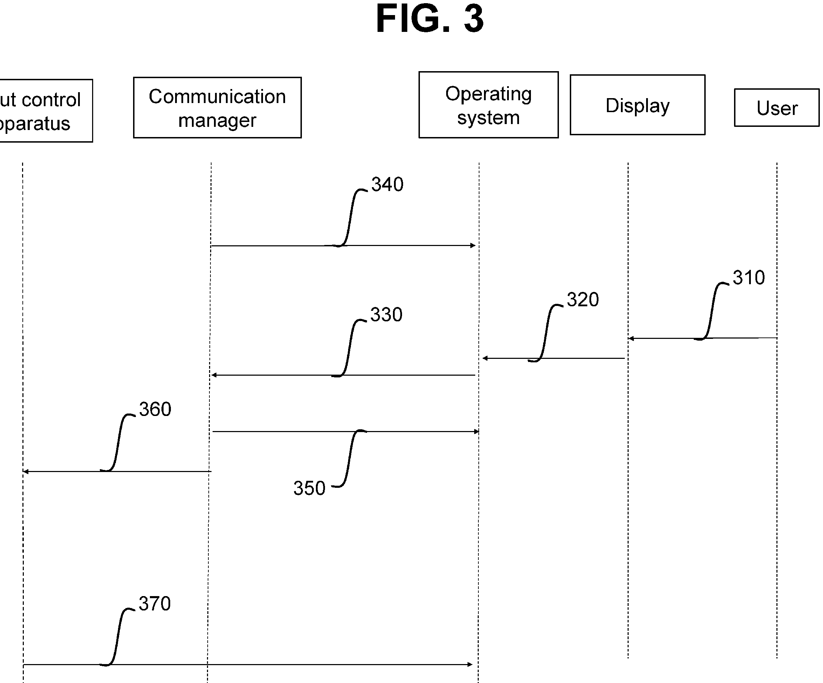

The operation of the communication manager and the input control apparatus will now be described with reference to Figure 3. Figure 3 shows how touch input events may be generated by a user and pass through the computer system 100. In step 310, a user of at least one of the first display 111 and the second display 115 generates a touch input event, for example by performing a touch interaction with at least one of the first display 111 and the second display 115 The touch input event is generated by the touch input device, for example the second touch screen display 115. The touch input event is sent by the touch input device to the operating system in step 320.

If the communication manager and the input control apparatus were not running on the computer system, the operating system would process the touch input event a perform an action based on the data associated with the touch input event. For example, the operating system may send the input event to a program window that is the present focus of the operating system as described above.

However, when the communication manager and the input control apparatus are present, the operating system may instead send the touch input event to the communication manager in step 330.

The communication manager may send an instruction to the operating system to cause the operating system to send at least some of the touch input events received by the operating system to the communication manager in step 340. Alternatively, the communication manager may instruct the operating system to send all of the touch input events received by the operating system to the communication manager. The communication manager may use predetermined functions of the operating system to register with the operating system to receive all input events from the operating system.

The communication manager may cause the operating system 120 to send at least some of the touch input events received by the operating system to the communication manager by instructing the operating system to create a window for receipt of all touch input events.

The communication manager may create a window for receipt of all touch input events, wherein the window is not visible to the users of the computer system.

The communication manager may receive more than one touch input event from the operating system.

When more than one touch input event is received by the communication manager, the communication manager may determine the order to send the touch input events to the input control apparatus based on data associated with the input events. For example, the communication manager may send touch input events associated with a particular touch input device or a particular position to the input control apparatus before sending touch input events of other types.

After receipt of the input event from the operating system, the communication manager may determine the type of the touch input event that has been received. Depending on the type of touch input event, the communication manager may send an instruction to the operating system to not perform any further processing associated with the input event in step 350. For example, the communication manager may instruct the operating system to perform no further processing if the touch input event has associated position data. Alternatively, the communication manager may instruct the operating system to perform no further processing if the touch input event is associated with a particular type touchscreen display.

The communication manager may perform a conversion on the input event. For example, the communication manager may perform a conversion on the data associated with the input event to convert the data into a different format.

In step 360, the communication manager sends the touch input event to the input control apparatus.

However, the communication manager may not send the touch input event to the input control apparatus. For example, the communication manager may not send the touch input event to the input control apparatus depending on the type of touch input device associated with the touch input event, for example if the input event is associated with a digital pen stylus. In this case, the communication manager may instead return the input event to the operating system.

After receipt of the touch input event, the input control apparatus checks the position data associated with the touch input event. The input control apparatus may compare the position data to a predetermined area, which may also be referred to as a predefined area. For example, the input control apparatus may process x-y coordinate data associated with the touch input event to determine if the coordinate data falls within the x-y coordinate space defined by the predetermined area. The location of the predetermined area may be stored by the input control apparatus.

The predetermined area may be associated with the touch screen display or touch area defined by one or more of the displays connected to the computer system 100. Alternatively, the predetermined area may be associated with a section of the display or touch area defined by one of the displays. The predetermined area may be defined using the resolution of the display or touch area of the one or more displays. The predetermined area may be defined using a different coordinate system to the position data associated with the touch input event. In this case, the input control apparatus may perform a transformation on the position data associated with the input event before comparing the transformed position data with the predetermined area.

If the position data associated with the input event is determined by the input control apparatus to be within the predetermined area, the input control apparatus may send the touch input event to a target program module associated with the predetermined location. The input control apparatus may send the touch input event by sending a simulated mouse event to the target program module. If the position data associated with the touch input event is determined to not be within the predetermined area, the input control apparatus may return the touch input event to the operating system in step 370. The touch input event may be returned to the operating system in the same form that the operating system originally received the touch input event from the input device. The touch input event may subsequently be processed by the operating system in the same way as if the operating system had received the touch input event from the input device and had not sent the touch input event to the communication manager.

The input control apparatus may group two or more touch input events into a combined input event which may be referred to as an input command. The input control apparatus may determine the input command based on the combination and order of input events received. For example, if the input control apparatus receives a pointer down event followed by a pointer up event followed by a pointer down event followed by a pointer up event, where each input event is associated with the same location, the input control apparatus may combine each of the events into a "double click" input command. The input control apparatus may be able to determine different input commands based on the combination of input event characteristics, such as drag and drop and gesture commands. The input control apparatus may determine a particular input command based on the characteristics of the input events as discussed above.

The computer system 100 may comprise a plurality of input control apparatus. Each of the input control apparatus may be associated with a different predefined area. Each of the different predefined areas may be associated with a different target program running on the computer system 100. In this case, the communication manager may send the input event to each of the input control apparatus.

Although the computer system 100 described above has described some steps as being carried out by the communication manager and other steps as being carried out by the input control manager, the computer system 100 is not limited to this arrangement. For example, any or all of the steps described above may be performed by the input control apparatus. Alternatively, any or all of the steps above may be performed by the communication manager.

A method of managing receipt of input events from different users may comprise receiving a touch input event from the operating system by the input control module due to a user interacting with the touch screen, comparing the position data associated with the input event with a predefined area by the input control module, wherein if the input event is associated with the predefined area, sending the input event to the target program module from the input control module and wherein if the input event is not associated with the predefined area, returning the input event to the operating system via the input control module.

The flow charts and descriptions thereof herein should not be understood to prescribe a fixed order of performing the method steps described therein. Rather, the method steps may be performed in any order that is practicable. Although the present invention has been described in connection with specific exemplary embodiments, it should be understood that various changes, substitutions, and alterations apparent to those skilled in the art can be made to the disclosed embodiments without departing from the spirit and scope of the invention as set forth in the appended claims.

Methods and processes described herein can be embodied as code (e.g., software code) and/or data. Such code and data can be stored on one or more computer-readable media, which may include any device or medium that can store code and/or data for use by a computer system. A computer system can comprise one or more connected computers, which may be real or virtual machines. A computer may comprise one or more processors, including general purpose CPUs and special purpose processors such as GPUs.

## Claims

1. A computer system for managing receipt of touch input events, the computer system being controlled by an operating system and comprising a communication module and an input control module;
wherein the communication module is configured to:
receive all touch input events from the operating system due to a user interacting with a touch screen display;
compare the position data associated with the touch input event with a predefined area, and
wherein, if the position data is associated with the predefined area, send the touch input event to the input control module, the computer system **characterised in that** the communication module is further configured to:
instruct the operating system to create a window for receipt of all touch input events,
and wherein, if the position data is not associated with the predefined area, return the touch input event to the operating system including a data conversion.

2. The computer system of claim 1, wherein the window is not visible to the users of the computer system.

3. The computer system of any preceding claim, further comprising minimum two touch screen displays: wherein the predefined area corresponds to at least part of an operational area of the two touch screen displays.

4. The computer system of claims 1 to 3, wherein the communication module is further configured to:
instruct the operating system to receive alia touch input events to the non visible window from the operating system due to multiple users interacting with the two or more touch screen displays.

5. The computer system of any one of claims 1 to 4, wherein the communication module is further configured to, when sending the touch input event to the operating system:
additionally include the converted data associated with the touch input event.

6. The computer system of any one of claims 1 to 5, wherein the system is configured such that the screens are used by different users and one user cannot see all screens at the same time.

7. A method for managing receipt of touch input events, the method being controlled by an operating system and comprising a communication module and an input control module; wherein the communication module is configured to:
receive all touch input events from the operating system due to a user interacting with a touch screen display;
compare the position data associated with the touch input event with a predefined area, and
wherein, if the position data is associated with the predefined area, send the touch input event to the input control module, the computer system **characterised in that** the communication module is further configured to:
instruct the operating system to create a window for receipt of all touch input events,
and wherein, if the position data is not associated with the predefined area, return the touch input event to the operating system including a data conversion.

8. The method of claim 7, wherein the window is not visible to the users of the computer system.

9. The method of any preceding claim, further comprising minimum two touch screen displays:
wherein the predefined area corresponds to at least part of an operational area of the two touch screen displays.

10. The method of claims 7 to 9, further comprising:
instructing the operating system to send all touch input events to the non visible window from the operating system due to multiple users interacting with the two or more touch screen displays.

11. The method any one of claims 7 to 10, wherein the communication module is further configured to, when sending the touch input event to the operating system:
additionally include the converted data associated with the touch input event.

12. The method of any one of claims 7 to 11, wherein the system is configured such that the screens are used by different users and one user cannot see all screens at the same time.

13. A computer program comprising code means that, when executed by a computer system, instructs the computer system to perform the method of any one of claims 7 to 12.
